(19) Europäisches Patentamt
European Patent Office
Office européen des brevets

(11) **EP 3 591 352 B1**

(12) **EUROPÄISCHE PATENTSCHRIFT**

(45) Veröffentlichungstag und Bekanntmachung des Hinweises auf die Patenterteilung:
**22.12.2021   Patentblatt 2021/51**

(51) Int Cl.:
***G01G 7/04*** *(2006.01)*

(21) Anmeldenummer: **18181964.0**

(22) Anmeldetag: **05.07.2018**

(54) **KIBBLE-WAAGE**

KIBBLE BALANCE

BALANCE DU WATT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.01.2020   Patentblatt 2020/02**

(73) Patentinhaber:
• **Bundesrepublik Deutschland, vertreten durch das Bundesministerium für Wirtschaft und Energie, 38116 Braunschweig (DE)**
• **Technische Universität Ilmenau 98693 Ilmenau (DE)**

(72) Erfinder:
• **Rothleitner, Christian 38176 Wendeburg (DE)**
• **Günther, Ludwig 38114 Braunschweig (DE)**
• **Schleichert, Jan 99085 Erfurt (DE)**
• **Rogge, Norbert 98693 Ilmenau (DE)**
• **Vasilyan, Suren 98693 Ilmenau (DE)**

(74) Vertreter: **Gramm, Lins & Partner Patent- und Rechtsanwälte PartGmbB Theodor-Heuss-Straße 1 38122 Braunschweig (DE)**

(56) Entgegenhaltungen:
**JP-A- S6 388 407**

• **ROTHLEITNER C ET AL: "The Planck-Balance-using a fixed value of the Planck constant to calibrate E1/E2-weights", MEASUREMENT SCIENCE AND TECHNOLOGY, IOP, BRISTOL, GB, Bd. 29, Nr. 7, 22. Mai 2018 (2018-05-22), Seite 74003, XP020328258, ISSN: 0957-0233, DOI: 10.1088/1361-6501/AABC9E [gefunden am 2018-05-22]**

**Beschreibung**

Die Erfindung betrifft eine Kibble-Waage, die in einem statischen Betriebsmodus und einem dynamischen Betriebsmodus betreibbar ist, mit (a) einem Lastaufnehmer zum Aufnehmen eines Wägestücks, (b) einer bestrombaren Spule, (c) einem Permanentmagneten, der ein Magnetfeld erzeugt, und (d) einem Widerstandselement, wobei (e) die bestrombare Spule derart in dem Magnetfeld gelagert ist, dass durch ein Bestromen der Spule mit einem Strom $I_K$ eine von dem Wägestück im statischen Betriebsmodus auf den Lastaufnehmer ausgeübte Gewichtskraft $F_G$ durch eine auf die Spule wirkende elektromagnetische Kraft $F_{em}$ kompensierbar ist und wobei (f) die Kibble-Waage eingerichtet ist (i) zum Bestimmen einer an dem Widerstandselement abfallenden Spannung U, wenn die Spule im statischen Betriebsmodus mit dem Strom $I_K$ bestromt wird, und (ii) zum Bestimmen einer in der Spule induzierten Spannung $U_{ind}$, wenn die Spule im dynamischen Betriebsmodus mit einer Geschwindigkeit v durch das Magnetfeld bewegt wird. Gemäß einem weiteren Aspekt betrifft die Erfindung ein Verfahren zum Betreiben einer Kibble-Waage.

Elektromagnetisch kompensierende Balkenwaagen sind beispielsweise aus der DE 2 621 483 C2 bekannt.

Aus der JP S63 88407 A ist eine elektromagnetisch kompensierende Waage bekannt, bei der die Gewichtskraft des Prüflings mittels eines Magnetfelds kompensiert wird. Das Magnetfeld wird von einem durch eine Spule fließenden elektrischen Strom erzeugt. Der elektrische Strom erzeugt über einem ohmschen Widerstand eine Spannung, die gemessen wird. Zum Wechseln des Messbereichs können unterschiedliche ohmsche Widerstande verwendet werden, sodass auch bei stark variierendem Strom die zu messende Spannung in einem vergleichsweise kleinen Spannungsintervall liegt.

Nachteilig an elektromagnetisch kompensierende Waagen ist, dass sie kalibriert werden müssen und ihr Messergebnis nicht konstruktionsbedingt auf Naturkonstanten zurückgeführt ist.

Kibble-Waagen, die auch als Watt-Waagen bezeichnet werden, können zur Bestimmung des Planck'schen Wirkungsquantums oder zur Massebestimmung eines Wägestücks eingesetzt werden. Die Kompensation einer durch ein Wägestück ausgeübten Gewichtskraft erfolgt bei Kibble-Waagen durch eine elektromagnetische Kraft.

Zur Massebestimmung mit einer Kibble-Waage werden zwei unterschiedliche Betriebsmodi verwendet. Zum einen der statische Betriebsmodus und zum anderen der dynamische Betriebsmodus.

Im statischen Betriebsmodus wird ein Wägestück von dem Lastaufnehmer aufgenommen. Bei dem Lastaufnehmer handelt es sich insbesondere um eine Wägeschale, auf die das Wägestück aufgelegt werden kann, oder um ein Anhängelement oder einen Anhängpunkt, an dem das Wägestück angehängt werden kann. Durch das Wägestück erfährt die Waage eine Auslenkung infolge der Gewichtskraft $F_G$. Diese berechnet sich zu $F_G = m\,g$, wobei m die Masse des Wägestücks und g die lokale Fallbeschleunigung ist.

Durch Bestromen der Spule in dem Magnetfeld wird eine elektromagnetische Kraft $F_{em}$ erzeugt. Der Strom wird dabei insbesondere derart eingeregelt, dass die elektromagnetische Kraft $F_{em}$ die Gewichtskraft $F_G$ kompensiert.

Die elektromagnetische Kraft berechnet sich zu $F_{em} = B\,L\,I$, wobei I die Stromstärke, B die magnetische

$$I = \frac{U}{R}$$

Flussdichte und L die Länge der Spule ist. Nach dem Ohm'schen Gesetz gilt $I = \frac{U}{R}$ .

Sofern die elektromagnetische Kraft die Gewichtskraft kompensiert, gilt entsprechend $F_G = F_{em}$ und damit

$$m\,g = B\,L\,I = B\,L\,\frac{U}{R} .$$

Die Parameter B und L, deren Produkt auch als geometrischer Faktor bezeichnet wird, sind messtechnisch nur schwer bestimmbar.

In dem dynamischen Modus wird die Spule mit einer konstanten Geschwindigkeit v durch das Magnetfeld des Permanentmagneten bewegt, wobei eine Spannung $U_{ind}$ in der Spule induziert wird. Die induzierte Spannung berechnet sich zu $U_{ind} = B\,L\,v$ woraus sich entsprechend ergibt, dass der geometrische Faktor $BL = \frac{U_{ind}}{v}$ ist. Setzt man v dies in die obige Gleichung ein und formt diese um, so erhält man für die Masse

$$m = \frac{U \cdot U_{ind}}{g \cdot v \cdot R}.$$

Der Strom, der notwendig ist, um die Gewichtskraft $F_G$ zu kompensieren, ist der Strom $I_K$, der auch als Kompensationsstrom bezeichnet wird. Dieser wird vorzugsweise indirekt über den Spannungsabfall an einem Widerstandselement mit dem elektrischen Gesamtwiderstand R gemessen. Dieser Spannungsabfall ergibt die Spannung U, die in die obige Formel eingeht. Die Messung erfolgt beispielsweise mittels eines Voltmeters. Die in der Spule im dynamischen Betriebsmodus induzierte Spannung $U_{ind}$ wird insbesondere ebenfalls mittels eines Voltmeters bestimmt.

Im dynamischen Betriebsmodus wird die Geschwindigkeit, mit der die Spule durch das Magnetfeld bewegt wird, vorzugsweise mittels eines Interferometers und eines Frequenzstandards bestimmt. Mittels des Interferometers wird die von der Spule zurückgelegte Strecke zeitabhängig bestimmt und diese anschließend ins Verhältnis zu der dabei verstrichenen Zeit gesetzt. Der Frequenzstandard zum Ermitteln dieser Zeit ist vorzugsweise eine Atomuhr, insbesondere eine Rubidium-Uhr.

Zur Ermittlung der Fallbeschleunigung g ist der Kibble-Waage vorzugsweise ein Gravimeter zugeordnet, welches besonders bevorzugt Teil der Kibble-Waage ist. Bei dem Gravimeter handelt es sich bevorzugt um ein Absolutgravimeter, mit welchem die Fallbeschleunigung direkt bestimmbar ist.

Im statischen Betriebsmodus, der auch als Wägemodus bezeichnet wird, wird die Spule, durch die von dem Wägestück auf den Lastaufnehmer ausgeübte Gewichtskraft, aus einer Nullstellung ausgelenkt. Die Spule wird dann insbesondere mit einem Strom bestromt, wobei der Strom derart gewählt wird, dass die Spule wieder in die Nullstellung gelangt. In diesem Fall gilt $F_G = F_{em}$.

Hierzu wird in Abhängigkeit der Position der Spule, die beispielsweise über einen Lageindikator oder ein Interferometer bestimmt wird, über eine Rückkopplung der benötigte Strom reguliert, bis die Nullstellung erreicht ist. Solche Kibble-Waagen sind aufgrund der noch ausstehenden Definition der SI-Einheit Kilogramm über eine Messvorschrift üblicherweise derart ausgebildet, dass sie die Masse eines Wägestücks mit einer Masse von annähernd oder genau einem Kilogramm möglichst präzise bestimmen können, wobei die Masse von Wägestücken anderer Massen nur mit deutlich geringerer Präzision bestimmt werden kann. Der hierfür notwendige Permanentmagnet weist üblicherweise eine Masse von mehreren 100 Kilogramm auf.

Der Erfindung liegt die Aufgabe zugrunde, Nachteile im Stand der Technik zu vermindern.

Die Erfindung löst die gestellte Aufgabe durch eine Kibble-Waage mit den Merkmalen von Anspruch 1.

Das Widerstandselement dient insbesondere dazu, die Stromstärke, mit der die Spule bestromt wird, insbesondere die Kompensationsstromstärke $I_K$, indirekt zu bestimmen. Dafür wird, wie bereits beschrieben, die an dem Widerstandselement abfallende Spannung U bestimmt, sodass bei bekanntem elektrischem Widerstand des Widerstandselements, die Stromstärke bestimmbar ist.

Das Widerstandselement besteht aus zumindest zwei Teilwiderstandselementen, wobei es selbstverständlich möglich und in bevorzugten Ausführungsformen vorteilhaft ist, wenn mehr als zwei Teilwiderstandselemente und/oder mehr als zwei Schaltanordnungen existieren, in die die Teilwiderstandselemente bringbar sind. Bevorzugt weist das Widerstandselement zumindest drei, weiter bevorzugt zumindest fünf, besonders bevorzugt zumindest sechs, insbesondere genau sechs, insbesondere bevorzugt zumindest zehn Teilwiderstandselemente auf. Bevorzugt ist pro Dekade eines Wägebereichs der Kibble-Waage zumindest ein Teilwiderstandselement, insbesondere genau ein Teilwiderstandselement vorhanden. Reicht der Wägebereich der Kibble-Waage beispielsweise von 1 mg bis 1kg, so liegen 6 Dekaden, also Zehnerpotenzen vor, nämlich 1 mg bis 10 mg, 10 mg bis 100 mg, 100 mg bis 1 g, 1 g bis 10 g, 10 g bis 100 g und 100 g bis 1kg. In diesem Fall weist das Widerstandselement zumindest sechs, insbesondere genau sechs Teilwiderstandselemente auf.

Unter Schaltanordnungen sind insbesondere Verschaltungszustände der Teilwiderstandselemente zu verstehen. In den Schaltanordnungen gibt es aktiv geschaltete Teilwiderstandselemente, deren elektrischer Widerstand in der jeweiligen Schaltanordnung zu dem resultierenden Gesamtwiderstand R des Widerstandselements beitragen. Die nicht aktiv geschalteten Teilwiderstandselemente sind inaktiv geschaltet. Der elektrische Widerstand der Teilwiderstandselemente im inaktiv geschalteten Zustand trägt in der jeweiligen Schaltanordnung nicht zum resultierenden Gesamtwiderstand R des Widerstandselements bei.

Im einfachsten Fall weist das Widerstandselement zwei Teilwiderstandselemente auf, die einen elektrischen Widerstand $R_1$ und $R_2$ aufweisen. In einer ersten Schaltanordnung ist lediglich das erste Teil-Widerstandselement mit dem elektrischen Widerstand $R_1$ aktiv geschaltet, sodass der resultierende Gesamtwiderstand $R = R_1$ ist. In einer zweiten Schaltanordnung ist nur das zweite Teil-Widerstandselement mit dem elektrischen Widerstand $R_2$ aktiv geschaltet, sodass der resultierende Gesamtwiderstand $R = R_2$ ist. In einer dritten Schaltanordnung sind beide Teilwiderstandselemente aktiv geschaltet und in Reihe geschaltet, sodass der resultierende Gesamtwiderstand $R = R_1 + R_2$ ist. Vorzugsweise oder alternativ ist es zudem möglich, die Teilwiderstandselemente parallel zu schalten, sodass der resultierende Gesamtwiderstand bei zwei Teilwiderstandselementen $R = R_1 * R_2 / (R_1 + R_2)$ ist.

Sofern $R_1$ und $R_2$ unterschiedlich sind, was eine bevorzugte Ausführungsform darstellt, sind folglich vier unterschiedliche resultierenden Gesamtwiderstände erzielbar, nämlich $R = R_1$, $R = R_2$, $R = R_1 + R_2$ und $R = R_1 * R_2 / (R_1 + R_2)$. Sofern die elektrischen Widerstände der beiden Teilwiderstandselemente gleich sind, sind folglich drei unterschiedliche resultierende Gesamtwiderstände erzielbar, nämlich

$$R = R_1 = R_2, \ R = R_1 + R_2 \text{ und } R = R_1 * R_2 / (R_1 + R_2).$$

Dadurch, dass die Teilwiderstandselemente in unterschiedliche Schaltanordnungen bringbar sind, sodass unterschiedliche Gesamtwiderstände resultieren, kann insbesondere bei unterschiedlichen Massen des Wägestücks ein ähnlicher, insbesondere identischer Spannungsabfall an dem Widerstandselement erzielt werden. Zwischen der Stromstärke und der abfallenden Spannung besteht nach dem Ohm'schen Gesetz ein linearer Zusammenhang. Bei konstantem elektrischem Widerstand steigt die an dem Widerstandselement abfallende Spannung, wenn die Stromstärke steigt. Umgekehrt gilt, dass die abfallende Spannung sinkt, wenn die Stromstärke sinkt.

Zwischen der Masse und dem zur Kompensation notwendigen Strom besteht ebenfalls ein linearer Zusammenhang, wobei eine höhere Masse des Wägestücks eine höhere Stromstärke $I_K$ benötigt, um die Gewichtskraft zu kompensieren. Ein Wägestück geringerer Masse benötigt entsprechend eine geringere Stromstärke $I_K$. Dies führt zu einem geringeren Spannungsabfall an dem Widerstandselement. Bei Verwendung eines Spannungsmessgeräts mit vorgegebener Auflösung steigt die relative Messunsicherheit bei kleineren Messwerten und entsprechend bei kleineren Massen.

Vorzugsweise deckt die Kibble-Waage einen Wägebereich von 1 mg bis 1 kg ab. Dies bedeutet insbesondere, dass die Masse von Wägestücken mit Massen von 1 mg bis 1 kg mit einer vorgegebenen Höchst-Messunsicherheit über den gesamten Massenbereich bestimmt werden kann. Diese relative Messunsicherheit beträgt vorzugsweise höchstens $10^{-3}$, weiter vorzugsweise höchstens $5*10^{-4}$. Bevorzugt ist die erzielbare relative Messunsicherheit für unterschiedliche Massen oder Massenbereiche unterschiedlich groß, wobei sie stets geringer oder gleich der Höchst-Messunsicherheit ist. So beträgt die relative Messunsicherheit bei einer Masse des Wägestücks von 1 mg vorzugsweise höchstens $10^{-3}$, besonders bevorzugt höchstens $5*10^{-4}$. Bei einer Masse von 10 mg beträgt die relative Messunsicherheit bevorzugt höchstens $1{,}33*10^{-4}$, besonders bevorzugt höchstens $5*10^{-5}$. Bei einer Masse von 100 mg beträgt die relative Messunsicherheit bevorzugt höchstens $2{,}67*10^{-5}$, besonders bevorzugt höchstens $8{,}33*10^{-6}$. Bei einer Masse von 1 g beträgt die relative Messunsicherheit bevorzugt höchstens $5*10^{-6}$, besonders bevorzugt höchstens $1{,}67*10^{-6}$. Bei einer Masse von 10 g beträgt die relative Messunsicherheit bevorzugt höchstens $10^{-6}$, besonders bevorzugt höchstens $3{,}33*10^{-7}$. Bei einer Masse von 100 g beträgt die relative Messunsicherheit bevorzugt höchstens $2{,}67*10^{-7}$, besonders bevorzugt höchstens $8{,}33*10^{-8}$. Bei einer Masse von 1 kg beträgt die relative Messunsicherheit bevorzugt höchstens $2{,}67*10^{-7}$, besonders bevorzugt höchstens $8{,}35*10^{-8}$.

E

Dadurch, dass der resultierende Gesamtwiderstand R des Widerstandselements durch die zumindest zwei Teilwiderstandselemente verändert werden kann, können Wägestücke stark unterschiedlicher Massen mit der gleichen geringen Messunsicherheit gewogen werden. So kann beispielsweise bei einem Wägestück eine Schaltanordnung derart gewählt werden, dass die resultierende abfallende Spannung in einem vorgegebenen Bereich liegt.

Besonders bevorzugt ist das Widerstandselement als ein Widerstandsarray mit einer Vielzahl an Teilwiderstandselementen ausgebildet, sodass die abfallende Spannung für jede Masse eines Wägestücks mit Massen im Bereich 1 mg bis 1 kg, der auch als Wägebereich bezeichnet wird, in einem bestimmten Bereich um eine vorgegebene Spannung $U_v$ herum gehalten werden kann. Vorzugsweise kann eine abfallende Spannung im Bereich von $U_v \pm 82$ %, insbesondere im Bereich von $U_v \pm 81{,}8$ %, weiter bevorzugt im Bereich von $U_v \pm 71$ %, noch weiter bevorzugt $U_v \pm 30$ %, besonders bevorzugt $U_v \pm 25$ %, insbesondere bevorzugt $U_v \pm 20$ % über den gesamten Wägebereich erzielt werden. $U_v$ beträgt bevorzugt 0,66 V. Wenn $U_v$ 0,66 V beträgt, weist der Bereich $U_v \pm 81{,}8$ % eine obere Grenze bei 1,2 V und eine untere Grenze bei 0,12 V auf, sodass eine Dekade abgedeckt ist. Auf diese Weise kann insbesondere für jede Massendekade genau ein Teilwiderstandselement verwendet werden, wobei der Bereich von $U_v \pm 81{,}8$ % stets eingehalten wird.

Die Tatsache, dass die Kibble-Waage zum Bestimmen der an dem Widerstandselement abfallenden Spannung U und einer in der Spule induzierten Spannung $U_{ind}$ eingerichtet ist, bedeutet, dass es möglich, nicht aber notwendig ist, dass eine elektronische Datenverarbeitungseinrichtung Teil der Kibble-Waage ist, der die jeweiligen Spannungen als Messsignale zugeleitet werden oder die diese aus ihr zugeleiteten Signalen ermittelt. Es reicht vielmehr aus, wenn die Kibble-Waage Einrichtungen aufweist, die ein Bestimmen der induzierten und der abfallenden Spannung erlauben, wenn eine elektronische Datenverarbeitungseinrichtung angeschlossen wird. Dies kann beispielsweise auch ein Anschluss für ein Spannungsmessgerät sein.

Bevorzugt weist die Kibble-Waage jedoch eine elektronische Datenverarbeitungseinrichtung auf, die eingerichtet ist, die Masse des Wägestücks, insbesondere anhand $m = \dfrac{U \cdot U_{ind}}{g \cdot v \cdot R}$ , zu berechnen.

Die Kibble-Waage weist (a) ein erstes Spulenelement und ein zweites Spulenelement auf, wobei das erste Spulenelement und das zweite Spulenelement gleichzeitig oder separat bestrombar sind und/oder (b) die bestrombare Spule eine Mehrzahl an Kontaktpunkten aufweist, über die die Spule bestrombar ist. So ist eine effektive Länge der bestrombaren Spule einstellbar.

Es besteht ein lineares Verhältnis zwischen der elektromagnetischen Kraft und der Stromstärke gemäß $F_{em}=$ B L I. Folglich hat auch die Länge L der Spule einen Einfluss auf den zur Kompensation notwendigen Strom $I_K$. Dieser ist umso kleiner, je größer die Spulenlänge ist. Bei der Spulenlänge kann es sich entweder um die tatsächliche Länge der Spule handeln oder aber um eine effektive Länge, insbesondere dann, wenn nur ein Teil der Spule bestromt wird.

Die bestromte Länge der Spulen ist dann die effektive Spulenlänge und geht als Spulenlänge L in die Formel ein. Auf diese Weise ist es neben einer Einstellung des resultierenden Gesamtwiderstands über die Teilwiderstandselemente auch über die Spule möglich, den für die Kompensation notwendigen Strom $I_K$ zu beeinflussen und damit die an dem Widerstandselement abfallende Spannung einzustellen.

So ist es beispielsweise möglich und bevorzugt, dass eine Spule aus mehreren, insbesondere zwei, drei, vier oder mehr, Spulenelementen besteht, welche separat oder gemeinsam bestromt werden können. Besteht eine Spule beispielsweise aus drei Spulenelementen, so ist es insbesondere möglich, ein, zwei oder alle drei Spulenelemente zu bestromen und so die effektive Spulenlänge zu variieren. Darüber hinaus ist es möglich, dass an der bestrombaren Spule Kontaktpunkte vorhanden sind, über die die Spule bestromt werden kann. Über die Abstände der Kontaktpunkte zueinander ist dann die effektive Länge der Spule einstellbar.

Bevorzugt weist die Kibble-Waage zumindest zwei Spulen auf, welche jeweils wiederum Spulenelemente oder Kontaktpunkte wie vorstehend beschrieben aufweisen können. Vorzugsweise ist jeder dieser Spulen ein eigener Permanentmagnet zugeordnet, in dessen Magnetfeld sie gelagert ist. Die zumindest zwei Spulen befinden sich vorzugsweise räumlich unterhalb des Lastaufnehmers, sodass die auf den Lastaufnehmer wirkende Gewichtskraft $F_G$ direkt kompensiert wird. Es ist jedoch ebenfalls möglich und in bestimmten Ausführungsformen vorteilhaft, wenn sich zumindest eine Spule räumlich neben oder oberhalb des Lastaufnehmers befindet. Durch die Wahl der Anzahl der bestromten Spulen und/oder Spulenelemente kann Einfluss auf den notwendigen Kompensationsstrom $I_K$ und damit die an dem Widerstandselement abfallende Spannung genommen werden.

Bevorzugt weist die Kibble-Waage einen Wägearm auf, der an einem Auflager drehbar angeordnet ist, wobei die Kibble-Waage zumindest eine erste bestrombare Spule und eine zweite bestrombare Spule aufweist, und die erste bestrombare Spule in einem ersten Abstand zu dem Auflager und die zweite bestrombare Spule in einem zweiten Abstand zu dem Auflager an dem Balkenarm angeordnet sind und der erste Abstand und der zweite Abstand erste Hebellängen $H_1$ definieren.

Auf diese Weise ist es insbesondere möglich, ein Hebelverhältnis zu nutzen, um die zur Kompensation der Gewichtskraft notwendige Stromstärke $I_K$ zu variieren. Je weiter eine Spule von dem Auflager entfernt ist, desto größer ist die Hebellänge und desto geringer ist die zur Kompensation der Gewichtskraft $F_G$ notwendige elektromagnetische Kraft $F_{em}$ und damit der Kompensationsstrom $I_K$. Unter dem Abstand von dem Auflager ist insbesondere der Abstand entlang des Wägearms zu einem Drehpunkt des Wägearms an dem Auflager zu verstehen. Auf diese Weise ist es insbesondere möglich, kleiner dimensionierte Permanentmagneten vorzusehen, da je nach Hebelverhältnis deutlich geringere elektromagnetische Kräfte $F_{em}$ zum Kompensieren der Gewichtskraft $F_G$ eines Wägestücks notwendig sind.

Alternativ oder zusätzlich ist es möglich, dass an dem Wägearm nur eine oder mehrere Spulen angeordnet sind, die jeweils verschieblich an dem Wägearm gelagert sind, sodass unterschiedliche erste Hebellängen $H_1$ einstellbar sind. In einer weiteren alternativen Ausführungsform sind lediglich Spulenlagerstellen an dem Wägearm angeordnet, an denen jeweils Spulen angeordnet werden können. Auf diese Weise ist es beispielsweise möglich, in verschiedenen Abständen vom Auflager, also in unterschiedlichen ersten Hebellängen Spulenlagerstellen vorzusehen, an denen eine oder mehrere Spulen nach Bedarf angeordnet werden können.

Bevorzugt definiert ein Abstand zwischen dem Auflager und dem Lastaufnehmer eine zweite Hebellänge $H_2$, wobei ein maximales Hebelverhältnis $H_1:H_2$ zumindest 10:1 beträgt. Das maximale Hebelverhältnis beträgt insbesondere höchstens 10.000:1, bevorzugt höchstens 1000:1, besonders bevorzugt höchstens 100:1.

Es ist ebenfalls möglich und in bestimmten Ausführungsformen vorteilhaft, dass das maximale Hebelverhältnis zumindest 5:1 oder zumindest 1:1 beträgt.

Auf diese Weise ist es insbesondere möglich, auch die Gewichtskraft $F_G$ eines schweren Wägestücks von beispielsweise 1 kg mittels einer geringen elektromagnetischen Kraft $F_{em}$ zu kompensieren. So ist es insbesondere möglich einen kompakten Permanentmagnet zu verwenden, der vorzugsweise höchstens 10 kg, weiter bevorzugt höchstens 5 kg, besonders bevorzugt höchstens 1 kg, insbesondere bevorzugt höchstens 0,5 kg wiegt.

Unter einem maximalen Hebelverhältnis ist insbesondere das größte Hebelverhältnis zu verstehen, welches mit den an dem Wägearm angeordneten Spulen realisierbar ist. Dies gilt entsprechend auch für die alternative Ausgestaltung mit Spulenlagerstellen oder verschieblich angeordneten Spulen, wobei jeweils das größte realisierbare Hebelverhältnis gemeint ist.

Bevorzugt weist die Kibble-Waage einen Parallelführungsarm auf, der an einem zweiten Auflager angeordnet ist und derart an den Wägearm angeordnet ist, dass eine Bewegung der bestrombaren Spule in dem Magnetfeld im statischen und im dynamischen Betriebsmodus nicht zu einer Änderung eines Kippwinkels der Spule relativ zu dem Magnetfeld führt.

Ohne einen solchen Parallelführungsarm ist es möglich, dass die Spule bei einer Bewegung um einen Kippwinkel relativ zu dem Magnetfeld kippt, folglich also seine Orientierung im Raum relativ zu dem Magnetfeld leicht verändert. Eine solche Kippbewegung und damit Ausrichtungsänderung relativ zum Permanentmagneten führt insbesondere zu parasitären Induktionsspannungen, welche die Messung beeinträchtigen können. Mittels des Parallelführungsarms ist es möglich zu gewährleisten, dass Bewegung der Spule ohne ein Verkippen und damit ohne eine Ausrichtungsänderung relativ zu dem Permanentmagneten oder relativ zu dem Magnetfeld erfolgt.

Besonders bevorzugt weist die Kibble-Waage zudem einen zweiten Parallelführungsarm auf, der derart an dem Wägearm angeordnet ist, dass auch eine Orientierung des Lastaufnehmers sich bei einer Bewegung im statischen und dynamischen Betriebsmodus nicht ändert. Auf diese Weise können Ecklastfehler minimiert werden.

Bevorzugt weist die Kibble-Waage eine Messunsicherheit von höchstens $10^{-3}$, bevorzugt höchstens $5*10^{-4}$ auf, wenn das Wägestück eine Masse von 1 mg bis 1 kg aufweist. Die maximale Messunsicherheit stellt einen Parameter dar, der für jedes Wägestück im Massenbereich von 1 mg bis 1 kg erzielt wird. Es ist jedoch möglich, dass die Messunsicherheit bei unterschiedlichen Massen unterschiedlich groß ist, solange die maximale Messunsicherheit über den gesamten Wägebereich gewahrt bleibt. So ist es beispielsweise möglich, dass die Messunsicherheit bei einem Wägestück mit einer Masse von 1 kg höchstens $9 \cdot 10^{-8}$, insbesondere höchstens $8,35 \cdot 10^{-8}$ beträgt.

Der Kibble-Waage ist vorzugsweise ein Kalibrierschein beigefügt, der die maximale Messunsicherheit ausweist. Zudem ist es möglich, dass der Kalibrierschein für unterschiedliche Massen oder Massenbereiche unterschiedliche Messunsicherheiten ausweist.

Die Erfindung löst die Aufgabe zudem durch ein Verfahren zum Betreiben einer hier beschriebenen Kibble-Waage, welches sich durch den Schritt auszeichnet: Bringen der zumindest zwei Teil-Widerstandselemente des Widerstandselements in eine erste Schaltanordnung oder eine zweite Schaltanordnung, in Abhängigkeit einer zu erwartenden Masse $m_e$ des Wägestücks, sodass eine an dem Widerstandselement abfallende Spannung U bei Verwendung von Wägestücken mit Massen 1 mg bis 1 kg stets in einem Bereich einer vorgegebenen Spannung $U_v \pm 82$ %, insbesondere $U_v \pm 81,8$ %, bevorzugt $U_v \pm 71$ % liegt.

Da, wie bereits dargelegt, zwischen den veränderlichen Parametern, wie der Spulenlänge oder dem elektrischen Gesamtwiderstand des Widerstandselements lineare Zusammenhänge zu dem Kompensationsstrom $I_K$ bestehen, ist bei gegebener Kibble-Waage oder bei gegebener Konfiguration einer Kibble-Waage eine Abschätzung möglich, welcher elektrische Widerstand notwendig sind, um die von einem Wägestück bestimmter Masse ausgehende Gewichtskraft mit einer vorgegebenen Genauigkeit zu kompensieren, also insbesondere die resultierende abfallende Spannung U innerhalb eines Fensters von $U_v \pm 82$ %, insbesondere $U_v \pm 81,8$ % liegt. Besonders bevorzugt ist es möglich, dass die Spannung stets in einem Bereich $U_v \pm 71$ % liegt. Alternativ oder zusätzlich ist es vorteilhaft, wenn keine Messbereichsumschaltung des verwendeten Spannungsmessgerätes notwendig ist. Auf diese Weise ist es insbesondere möglich, die Messunsicherheit, die von dem Spannungsmessgerät ausgeht, nahezu, insbesondere vollständig konstant über den gesamten Messbereich zu halten.

Bevorzugt wird zusätzlich ein Hebelverhältnis $H_1:H_2$ in Abhängigkeit der zu erwartenden Masse $m_e$ des Wägestücks gewählt, sodass eine an dem Widerstandselement abfallende Spannung U bei Verwendung von Wägestücken mit Massen von 1 mg bis 1 kg stets in einem Bereich einer vorgegebenen Spannung $U_v \pm 82$ %, insbesondere $U_v \pm 81,8$ %, besonders bevorzugt $U_v \pm 71$ %, liegt.

So wird beispielsweise ein größeres Hebelverhältnis gewählt, je größer die zu erwartende Masse innerhalb des Bereichs 1 mg bis 1 kg ist. Liegt beispielsweise bei einem Wägestück der Masse 10 g und gegebener Konfiguration der Kibble-Waage, also insbesondere gegebener Spulenlänge, gegebenem Hebelverhältnis und gegebenem resultierenden Gesamtwiderstand, die abfallende Spannung innerhalb des gewünschten Bereichs um Uv, so kann für ein Wägestück der Masse 100 g ein zehnfach größeres Hebelverhältnis oder ein zehnfach größerer resultierender Gesamtwiderstand oder eine zehnfache Spulenlänge gewählt werden. Es ist selbstverständlich möglich auch mehrere der genannten Parameter zu verändern.

Bevorzugt wird die zu erwartende Masse anhand einer Übersichtsmessung bestimmt, wobei die Übersichtsmessung mit der Kibble-Waage oder einer weiteren Waage erfolgt. Mit anderen Worten erfolgt zunächst eine Abschätzung der zu erwartenden Masse, anhand derer die Parameter wie resultierender Gesamtwiderstand, also die Wahl der Schaltanordnung der Teilwiderstandselemente und/oder das Hebelverhältnis und/oder die Anzahl oder die Länge der bestromten Spule eingestellt wird. Vorzugsweise erfolgt dies mit einer herkömmlichen Waage, beispielsweise einer Analysen- oder Laborwaage. Es ist jedoch ebenfalls möglich, dass die Übersichtsmessung mit der Kibble-Waage selbst durchgeführt wird. Dabei wird beispielsweise eine Abweichung der abfallenden Spannung von $U_v$ bestimmt und der oder die Parameter entsprechend der Richtung, also $> U_v$ oder $< U_v$, dieser Abweichung verändert. Liegt beispielsweise die abfallende Spannung oberhalb von $U_v$, so werden Maßnahmen getroffen, die die abfallende Spannung senken. Dies kann beispielsweise die Wahl eines größeren Hebelverhältnisses oder einer größeren Anzahl an bestromten Spulenelementen sein.

Bevorzugt werden für unterschiedliche Masseninintervalle unterschiedliche Hebellängen gewählt und/oder vorgegeben. So kann beispielsweise eine Hebellänge von insbesondere 10:1 für ein Masseninintervall von 100 g bis 1000 g gewählt und/oder vorgegeben werden. Auf diese Weise erfolgt über die Wahl des Hebelverhältnisses eine erste Anpassung der Konfiguration der Kibble-Waage an die Masse des Wägestücks. Für Intervalle von geringeren Massen, wie beispielsweise 100 g bis 10 g, kann entsprechend ein geringeres Hebelverhältnis von beispielsweise 5:1 oder aber 1:1 gewählt und/oder vorgegeben werden. Die weitere Variation des Kompensationsstroms $I_K$ erfolgt dann insbesondere über die Wahl der Anzahl der bestromten Spulen bzw. der Spulenelemente und/oder der Wahl der Schaltanordnung der Teilwiderstandselemente.

In einer alternativen Ausführungsform betrifft die Erfindung eine Kibble-Waage, die in einem statischen Betriebsmodus und einem dynamischen Betriebsmodus betreibbar ist, mit (a) einem Lastaufnehmer zum Aufnehmen eines Wägestücks, (b) einer bestrombaren Spule, (c) einem Permanentmagneten, der ein Magnetfeld erzeugt, und (d) einem Widerstandelement, wobei (e) die bestrombare Spule derart in dem Magnetfeld gelagert ist, dass durch ein Bestromen der Spule mit einem Strom $I_K$ eine von dem Wägestück im statischen Betriebsmodus auf den Lastaufnehmer ausgeübte Gewichtskraft $F_G$ durch eine auf die Spule wirkende elektromagnetische Kraft $F_{em}$ kompensierbar ist und wobei (f) die Kibble-Waage eingerichtet ist (i) zum Bestimmen einer an dem Widerstandselement abfallenden Spannung U, wenn die Spule im statischen Betriebsmodus mit dem Strom $I_K$ bestromt wird, und (ii) zum Bestimmen einer in der Spule induzierten Spannung $U_{ind}$, wenn die Spule im dynamischen Betriebsmodus mit einer Geschwindigkeit v durch das Magnetfeld bewegt wird, die sich dadurch auszeichnet, dass die bestrombare Spule zumindest ein erstes Spulenelement und ein zweites Spulenelement aufweist, wobei das erste Spulenelement und das zweite Spulenelement gleichzeitig oder separat bestrombar sind, und/oder die bestrombare Spule eine Mehrzahl an Kontaktpunkten aufweist, über die die Spule bestrombar ist, sodass eine effektive Länge der bestrombaren Spule einstellbar ist.

Alle bevorzugten Ausführungsformen, die in dieser Beschreibung beschrieben sind, gelten entsprechend auch für diese Ausführungsform der Erfindung.

In einer weiteren alternativen Ausführungsform betrifft die Erfindung eine Kibble-Waage, die in einem statischen Betriebsmodus und einem dynamischen Betriebsmodus betreibbar ist, mit (a) einem Lastaufnehmer zum Aufnehmen eines Wägestücks, (b) einer bestrombaren Spule, (c) einem Permanentmagneten, der ein Magnetfeld erzeugt, und (d) einem Widerstandelement, wobei (e) die bestrombare Spule derart in dem Magnetfeld gelagert ist, dass durch ein Bestromen der Spule mit einem Strom $I_K$ eine von dem Wägestück im statischen Betriebsmodus auf den Lastaufnehmer ausgeübte Gewichtskraft $F_G$ durch eine auf die Spule wirkende elektromagnetische Kraft $F_{em}$ kompensierbar ist und wobei (f) die Kibble-Waage eingerichtet ist (i) zum Bestimmen einer an dem Widerstandselement abfallenden Spannung U, wenn die Spule im statischen Betriebsmodus mit dem Strom $I_K$ bestromt wird, und (ii) zum Bestimmen einer in der Spule induzierten Spannung $U_{ind}$, wenn die Spule im dynamischen Betriebsmodus mit einer Geschwindigkeit v durch das Magnetfeld bewegt wird, die sich dadurch auszeichnet, dass die Kibble-Waage einen Wägearm aufweist, der an einem Auflager drehbar angeordnet ist, wobei die Kibble-Waage zumindest eine erste bestrombare Spule und eine zweite bestrombare Spule aufweist, und die erste bestrombare Spule in einem ersten Abstand zu dem Auflager und die zweite bestrombare Spule in einem zweiten Abstand zu dem Auflager an dem Wägearm angeordnet sind und der erste Abstand und der zweite Abstand erste Hebellängen H1 definieren.

Alle bevorzugten Ausführungsformen, die in dieser Beschreibung beschrieben sind, gelten entsprechend auch für diese Ausführungsform der Erfindung.

Die Erfindung wird im Folgenden anhand einer Figur beschrieben. Es zeigt

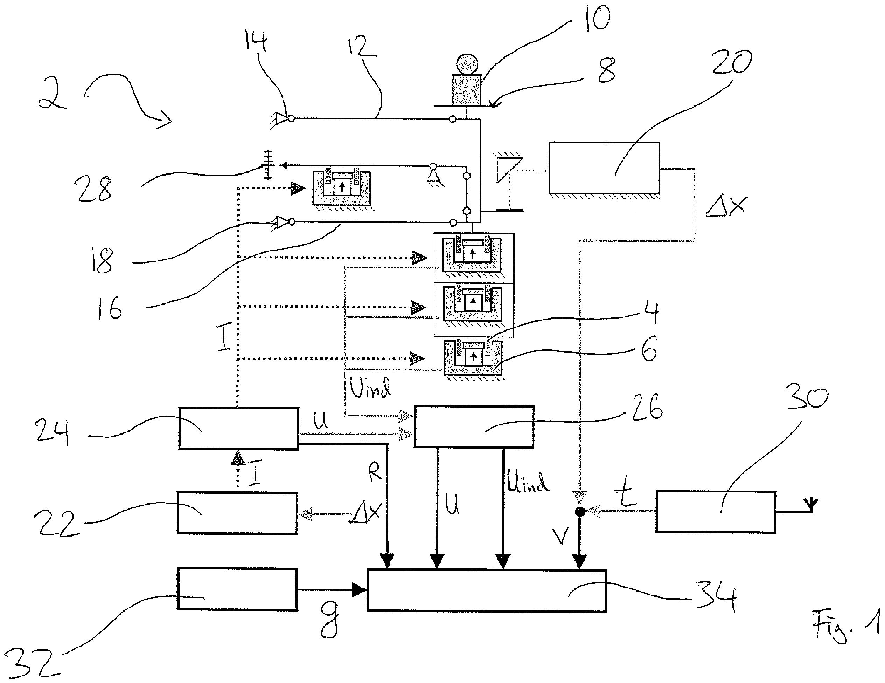

Figur 1  eine schematische Darstellung eines Ausführungsbeispiels einer erfindungsgemäßen Kibble-Waage.

Der Übersicht halber sind mehrfach vorkommende Elemente und Strukturen in der Figur jeweils nur einmal bezeichnet.

Figur 1 zeigt eine Kibble-Waage 2, welche vier bestrombare Spulen 4 und jeweils korrespondierende Permanentmagnete 6 aufweist. Der Lastaufnehmer 8 ist als Wägeschale ausgebildet und auf dieser ist ein Wägestück 10 angedeutet. Die Kibble-Waage ist jedoch in ihrer Nullstellung dargestellt, in der das Wägestück keine Gewichtskraft $F_G$ auf den Lastaufnehmer ausübt oder die ausgeübte Gewichtskraft $F_G$ durch eine elektromagnetische Kraft $F_{em}$ vollständig kompensiert ist. Wenn ein Wägestück 10 auf dem Lastaufnehmer angeordnet ist und eine Gewichtskraft $F_G$ auf den Lastaufnehmer 8 ausübt, so sinkt der Lastaufnehmer 8 infolge der Gewichtskraft $F_G$ nach unten, sofern keine oder keine ausreichende elektromagnetische Kraft $F_{em}$ dem entgegenwirkt.

Es ist zu erkennen, dass der Wägearm 12 der Kibble-Waage 2 an einem ersten Auflager 14 drehbar gelagert ist. Zudem weist die Kibble-Waage 2 einen Parallelführungsarm 16 auf, der an einem zweiten Auflager 18 gelagert ist. Übt nun das Wägestück 10 eine Gewichtskraft $F_G$ auf den Lastaufnehmer 8 aus, so bewegt sich die Anordnung nach unten, wobei der Wägearm 12 und der Parallel-Führungsarm 16 an dem ersten und zweiten Auflager 14, 18 parallel ausgelenkt werden. Dadurch vollführt die Anordnung eine Bewegung senkrecht nach unten, ohne dass es zu einer Kippbewegung des Lastaufnehmers 8 oder der Spulen 4 käme. Hierdurch werden insbesondere parasitäre Induktionsspannungen und Ecklastfehler vermieden. Die drei direkt unterhalb des Lastaufnehmers angeordneten Spulen 4 und die korrespondierenden Permanentmagnet 6 dienen dazu, die ausgeübte Gewichtskraft $F_G$ direkt zu kompensieren. Dazu werden sie einzeln oder gemeinsam mit einem Strom I bestromt, wobei eine der Gewichtskraft entgegengesetzte elektromagnetische Kraft $F_{em}$ erzeugt wird.

Die Kibble-Waage in Figur 1 weist ein Interferometer 20 auf, mittels welchem insbesondere die Auslenkung des Lastaufnehmers und/oder der Spulen aus einer Nullposition, die in Figur 1 dargestellt ist, bestimmt werden kann. Die ermittelte Strecke $\Delta x$, um die der Lastaufnehmer und/oder aus der Nullposition ausgelenkt ist, wird einer Strom-Regeleinrichtung 22 übermittelt. Diese regelt die Stromstärke, mit der die zumindest eine Spule bestromt wird. In Abhängigkeit von der Strecke Δx regelt die Strom-Regeleinrichtung 22 die Stromstärke, bis die Strecke Δx nahezu Null beträgt, insbesondere exakt Null beträgt.

Darunter, dass die Strecke Δx nahezu Null beträgt ist insbesondere zu verstehen, dass Δx kleiner als 500 nm ist, bevorzugt kleiner als 100 nm, weiter bevorzugt kleiner 100 pm, insbesondere bevorzugt kleiner 50 pm, insbesondere etwa 20 pm beträgt. Unter etwa 20 pm sind insbesondere 20 pm $\pm$ 2 pm zu verstehen. Wenn Δx Null beträgt gleichen sich die Kräfte $F_G$ und $F_{em}$ aus. Der dafür notwendige Strom ist der Kompensationsstrom $I_K$. Um den Strom I bzw. $I_K$ zu bestimmen, wird die an einem Widerstandselement 24 abfallende Spannung U bestimmt. Das Widerstandselement 24 besteht aus zumindest zwei Teilwiderstandselementen, welche zeichnerisch nicht dargestellt sind. Alternativ weist das Widerstandselement keine Teilwiderstandselemente auf. Die Teilwiderstandselemente können in unterschiedliche Schaltanordnungen gebracht werden, in denen das Widerstandselement 24 unterschiedliche resultierende Gesamtwiderstände aufweist. Bei konstantem Strom I bzw. $I_K$ ist es folglich möglich, über die Wahl des resultierenden Gesamtwiderstandes die abfallende Spannung U zu beeinflussen. Insbesondere wird dies eingesetzt, um die abfallende Spannung U in einem Bereich um eine vorgegebene Spannung $U_v$ zu halten oder zu bringen. Dieser Bereich ist insbesondere $U_v \pm 82$ %, insbesondere $U_v \pm 81{,}8$ %, bevorzugt $U_v \pm 71$ %.

Die Spannung U wird mittels eines Spannungsmessgerätes 26, welches insbesondere ein Voltmeter ist, bestimmt.

Alternativ oder zusätzlich kann auch die Spule 4 bestromt werden, die in der Figur links oben dargestellt ist. Diese befindet sich nicht direkt unterhalb des Lastaufnehmers 8 und kompensiert die Gewichtskraft $F_G$ folglich nicht direkt, sondern über den dargestellten Hebel. Diese Darstellung ist lediglich schematisch, so können insbesondere weitere Spulen 4 oder Spulenlagerstellen an dem Hebel vorgesehen sein, mit denen unterschiedliche Hebelverhältnisse realisiert werden können. Die Auslenkung des Hebels aus einer Nullstellung kann über einen Lageindikator 28 dargestellt werden.

Um die Masse des Wägestücks ermitteln zu können, muss die Kibble-Waage 2 zu neben dem statischen Betriebsmodus, der auch als Wägemodus bezeichnet wird, in einem dynamischen Betriebsmodus betrieben werden. In diesem werden eine oder mehrere Spulen 4 mit einer Geschwindigkeit v in dem Magnetfeld des oder der Permanentmagneten 6 bewegt. Hierdurch wird in den Spulen 4 eine Spannung $U_{ind}$ induziert, welche mittels des Spannungsmessgerätes 26 bestimmt wird. Dabei wird die eine Spule oder werden die mehreren Spulen insbesondere periodisch, bevorzugt sinusförmig, durch das Magnetfeld bewegt. Die Auslenkung aus einer Nullposition beträgt dabei insbesondere bis zu $\pm$ 50 μm, also insgesamt bis zu 100 μm. Zur Bestimmung der Geschwindigkeit v wird insbesondere die von dem Interferometer 20 gemessene zurückgelegte Strecke Δx während der insbesondere periodischen Bewegung gemessen und ins Verhältnis zu der dabei verstrichenen Zeit gesetzt. Diese Zeit wird mittels eines Frequenzstandards 30 ermittelt. Bei diesem handelt es sich insbesondere um eine Rubidiumuhr. Alternativ ist es möglich, dass die Kibble-Waage eine Zuleitung oder einen Zuleitungsanschluss für das Signal einer externen Atomuhr oder einem Signal für die nationale Atomzeit aufweist.

Zur Bestimmung der Masse eines Wägestücks mittels der Formel $m = \dfrac{U \cdot U_{ind}}{g \cdot v \cdot R}$ muss zudem die Fallbeschleunigung g ermittelt werden. Hierzu wird diese mittels eines Gravimeters 32 bestimmt. Bei dem Gravimeter kann es sich um ein Relativgravimeter oder um ein Absolutgravimeter handeln. Die Messwerte und/oder dafür kodierende Signale werden anschließend einer elektronischen Datenverarbeitungseinrichtung 34 zugeleitet. Diese ist eingerichtet, anhand der Parameter, die Masse des Wägestücks 10 zu bestimmen. Die Strom-Regelreinrichtung 22, welche in Figur 1 separat zu der elektronischen Datenverarbeitungseinrichtung 34 dargestellt ist, kann ebenso Teil der elektronischen Datenverarbeitungseinrichtung 34 sein. Insbesondere sind die elektronische Datenverarbeitungseinrichtung und/oder die Strom-Regeleinrichtung eingerichtet, die an dem Widerstandselement abfallende Spannung U in dem beschriebenen Bereich um eine vorgegebene Spannung $U_v$ zu bringen oder zu halten. Dazu kann beispielsweise eine bestimmte Schaltanordnung der Teilwiderstandselemente eingestellt werden und/oder die zu bestromende und/oder die Anzahl der zu bestromenden Spulen oder Spulenelemente einer Spule eingestellt werden.

**Bezugszeichenliste**

2 Kibble-Waage
4 bestrombare Spule
6 Permanentmagnet
8 Lastaufnehmer
10 Wägestück

| 12 | Wägearm |
|---|---|
| 14 | Auflager |
| 16 | Parallelführungsarm |
| 18 | zweites Auflager |
| 20 | Interferometer |
| 22 | Strom-Regeleinrichtung |
| 24 | Widerstandselement |
| 26 | Spannungsmessgerät |
| 28 | Lageindikator |
| 30 | Frequenzstandard |
| 32 | Gravimeter |
| 34 | elektronische Datenverarbeitungseinrichtung |

| g | lokale Fallbeschleunigung |
|---|---|
| I | Stromstärke |
| R | resultierender Gesamtwiderstand |
| t | Zeit |
| U | abfallende Spannung |
| $U_{ind}$ | induzierte Spannung |
| v | Geschwindigkeit |
| $\Delta x$ | Strecke |

**Patentansprüche**

1. Kibble-Waage (2), die in einem statischen Betriebsmodus und einem dynamischen Betriebsmodus betreibbar ist, mit

(a) einem Lastaufnehmer (8) zum Aufnehmen eines Wägestücks (10),
(b) einer bestrombaren Spule (4),
(c) einem Permanentmagneten (6), der ein Magnetfeld erzeugt, und
(d) einem Widerstandselement (24),
(e) wobei die bestrombare Spule (4) derart in dem Magnetfeld gelagert ist, dass durch ein Bestromen der Spule (4) mit einem Strom $I_K$ eine von dem Wägestück (10) im statischen Betriebsmodus auf den Lastaufnehmer (8) ausgeübte Gewichtskraft $F_G$ durch eine auf die Spule (4) wirkende elektromagnetische Kraft $F_E$ kompensierbar ist, und
(f) wobei die Kibble-Waage (2) eingerichtet ist

(i) zum Bestimmen einer an dem Widerstandselement (24) abfallenden Spannung U, wenn die Spule (4) im statischen Betriebsmodus mit dem Strom $I_K$ bestromt wird, und
(ii) zum Bestimmen einer in der Spule (4) induzierten Spannung $U_{ind}$, wenn die Spule im dynamischen Betriebsmodus mit einer Geschwindigkeit v durch das Magnetfeld bewegt wird,

**dadurch gekennzeichnet, dass**

(g) das Widerstandselement (24) zumindest zwei Teilwiderstandselemente aufweist, wobei die zumindest zwei Teilwiderstandselemente zumindest in eine erste Schaltanordnung und in eine zweite Schaltanordnung bringbar sind, wobei sich ein resultierender Gesamtwiderstand des Widerstandselements (24) in der ersten Schaltanordnung von dem resultierenden Gesamtwiderstand des Widerstandselements (24) in der zweiten Schaltanordnung unterscheidet,
(h) wobei

- die bestrombare Spule (4) zumindest ein erstes Spulenelement und ein zweites Spulenelement aufweist, wobei das erste Spulenelement und das zweite Spulenelement gleichzeitig oder separat bestrombar sind, und/oder
- die bestrombare Spule (4) eine Mehrzahl an Kontaktpunkten aufweist, über die die Spule bestrombar ist,

sodass eine effektive Länge der bestrombaren Spule (4) einstellbar ist.

**2.** Kibble-Waage (2) nach Anspruch 1, **dadurch gekennzeichnet, dass** die Kibble-Waage (2) einen Wägearm (12) aufweist, der an einem Auflager (14) drehbar angeordnet ist, wobei die Kibble-Waage (2) zumindest eine erste bestrombare Spule (4) und eine zweite bestrombare Spule (4) aufweist, und die erste bestrombare Spule (4) in einem ersten Abstand zu dem Auflager (14) und die zweite bestrombare Spule (4) in einem zweiten Abstand zu dem Auflager (14) an dem Wägearm (12) angeordnet sind und der erste Abstand und der zweite Abstand erste Hebellängen $H_1$ definieren.

**3.** Kibble-Waage (2) nach Anspruch 2, **dadurch gekennzeichnet, dass** ein Abstand zwischen dem Auflager (14) und dem Lastaufnehmer eine zweite Hebellänge $H_2$ definiert und ein maximales Hebelverhältnis $H_1$:$H_2$ zumindest 10:1 beträgt.

**4.** Kibble-Waage (2) nach einem der Ansprüche 2 und 3, **dadurch gekennzeichnet, dass**
die Kibble-Waage (2) einen Parallelführungsarm (16) aufweist, der an einem zweiten Auflager (18) angeordnet ist und derart an dem Wägearm (12) angeordnet ist, dass eine Bewegung der bestrombaren Spule (4) in dem Magnetfeld im statischen und im dynamischen Betriebsmodus nicht zu einer Änderung eines Kippwinkels der Spule (4) relativ zu dem Magnetfeld führt.

**5.** Kibble-Waage (2) nach einem der vorstehenden Ansprüche, **dadurch gekennzeichnet, dass** die Kibble-Waage (2) eine Messunsicherheit von höchstens $10^{-3}$ aufweist, wenn das Wägestück (10) eine Masse von 1 mg bis 1 kg aufweist, wobei der Kibble-Waage (2) ein Kalibrierschein beigefügt ist, der die Messunsicherheit ausweist.

**6.** Verfahren zum Betreiben einer Kibble-Waage (2) nach einem der vorstehenden Ansprüche, **gekennzeichnet durch** den Schritt:
Bringen der zumindest zwei Teilwiderstandselemente des Widerstandselements (24) in eine erste Schaltanordnung oder in eine zweite Schaltanordnung, in Abhängigkeit einer zu erwartenden Masse $m_e$ des Wägestücks (10), sodass eine an dem Widerstandselement (24) abfallende Spannung U bei Verwendung von Wägestücken (10) mit Massen von 1 mg bis 1 kg stets in einem Bereich einer vorgegebenen Spannung Uv$\pm$ 82 % liegt.

**7.** Verfahren nach Anspruch 6, **dadurch gekennzeichnet, dass** zusätzlich ein Hebelverhältnis $H_1$:$H_2$ in Abhängigkeit der zu erwartenden Masse $m_e$ des Wägestücks (10) gewählt wird, sodass eine an dem Widerstandselement (24) abfallende Spannung U bei Verwendung von Wägestücken (10) mit Massen von 1 mg bis 1 kg stets in einem Bereich einer vorgegebenen Spannung Uv$\pm$ 82 % liegt.

**8.** Verfahren nach einem der Ansprüche 6 und 7, **dadurch gekennzeichnet, dass** die zu erwartende Masse $m_e$ anhand einer Übersichtsmessung bestimmt wird, wobei die Übersichtsmessung mit der Kibble-Waage (2) oder einer weiteren Waage erfolgt.

**Claims**

**1.** A Kibble balance (2) that can be operated in a static operating mode and a dynamic operating mode, with

(a) a load receiver (8) for receiving a weight (10),
(b) a spool (4) that can be supplied with a current,
(c) a permanent magnet (6) that generates a magnetic field, and
(d) a resistance element (24),
(e) wherein the spool (4) that can be supplied with a current is mounted in the magnetic field in such a way that a weight force $F_G$ exerted by the weight (10) on the load receiver (8) in the static operating mode can be compensated by an electromagnetic force $F_E$ acting on the spool (4) by supplying the spool (4) with a current $I_K$, and
(f) wherein the Kibble balance (2) is configured to

(i) determine a voltage U dropping across the resistance element (24) when the spool (4) is supplied with the current $I_K$ in the static operating mode, and
(ii) determine a voltage $U_{ind}$ induced in the spool (4) when the spool is moved through the magnetic field at a speed v in the dynamic operating mode,

**characterised in that**

(g) the resistance element (24) comprises at least two sub-resistance elements, wherein the at least two sub-resistance elements can be brought into at least a first circuit arrangement and a second circuit arrangement, a resulting overall resistance of the resistance element (24) in the first circuit arrangement differing from the resulting overall resistance of the resistance element (24) in the second circuit arrangement,

(h) wherein

- the spool (4) that can be supplied with a current features a first spool element and a second spool element, wherein the first spool element and the second spool element can be supplied with a current simultaneously or separately, and/or
- the spool (4) that can be supplied with a current features a plurality of contact points via which the spool can be supplied with a current,

such that an effective length of the spool (4) that can be supplied with a current is adjustable.

2. The Kibble balance (2) according to claim 1, **characterised in that** the Kibble balance (2) has a weighing arm (12) that is rotatably arranged on a support (14), the Kibble balance (2) having at least a first spool (4) that can be supplied with a current and a second spool (4) that can be supplied with a current; the first spool (4) that can be supplied with a current being arranged on the weighing arm (12) at a first distance from the support (14) and the second spool (4) that can be supplied with a current being arranged on the weighing arm (12) at a second distance from the support (14); and the first distance and the second distance defining initial lever lengths $H_1$.

3. The Kibble balance (2) according to claim 2, **characterised in that** a distance between the support (14) and the load receiver defines a second lever length H2 and a maximum lever ratio $H_1:H_2$ is at least 10:1.

4. The Kibble balance (2) according to one of the claims 2 to 3, **characterised in that** the Kibble balance (2) has a parallel guide arm (16) that is arranged on a second support (18) and on the weighing arm (12) in such a way that a movement of the spool (4) that can be supplied with a current in the magnetic field in the static and dynamic operating mode does not cause a change in a tilt angle of the spool (4) relative to the magnetic field.

5. The Kibble balance (2) according to one of the preceding claims, **characterised in that** the Kibble balance (2) has a maximum measurement uncertainty of $10^{-3}$ when the weight (10) has a mass of 1 mg to 1 kg, wherein a calibration certificate that discloses the measurement uncertainty accompanies the Kibble balance (2).

6. A method for operating a Kibble balance (2) according to one of the preceding claims, **characterised by** the step: bringing the at least two sub-resistance elements of the resistance element (24) into a first circuit arrangement or a second circuit arrangement, depending on an expected mass $m_e$ of the weight (10), so that a voltage U dropping across the resistance element (24) when weights (10) with a mass of 1 mg to 1 kg are used always lies within a range of a predetermined voltage $Uv \pm$ 82 %.

7. The method according to claim 6, **characterised in that** a lever ratio $H_1:H_2$ is also selected depending on the expected mass $m_e$ of the weight (10), so that a voltage U dropping across the resistance element (24) when weights (10) with a mass of 1 mg to 1 kg are used always lies within a range of a predetermined voltage $Uv \pm$ 82 %.

8. The method according to one of the claims 6 and 7, **characterised in that** the expected mass $m_e$ is determined using a general measurement, wherein the general measurement is conducted with the Kibble balance (2) or another balance.


**Revendications**

1. Balance de Kibble (2) pouvant fonctionner en mode de fonctionnement statique et en mode de fonctionnement dynamique, comprenant

(a) un récepteur de charge (8) destiné à recevoir une pièce à peser (10),
(b) une bobine excitable (4),
(c) un aimant permanent (6) générant un champ magnétique, et
(d) un élément résistif (24),
(e) dans laquelle la bobine excitable (4) est montée dans le champ magnétique de telle sorte que, par alimentation de la bobine (4) en un courant $I_K$, un poids $F_G$ exercé sur le récepteur de charge (8) par la pièce à peser (10) en mode de fonctionnement statique peut être compensé par une force électromagnétique $F_E$ agissant sur la bobine (4), et

(f) la balance de Kibble (2) est conçue pour

(i) déterminer un voltage U chutant aux bornes de l'élément résistif (24), lorsque la bobine (4) est alimentée en courant $I_K$ en mode de fonctionnement statique, et

(ii) déterminer un voltage $U_{ind}$ induite dans la bobine (4), lorsque la bobine est déplacée à travers le champ magnétique à une vitesse v en mode de fonctionnement dynamique,

**caractérisée en ce que**

(g) l'élément résistif (24) comprend au moins deux éléments résistifs partiels, lesdits au moins deux éléments résistifs partiels pouvant être amenés au moins dans une première disposition de commutation et dans une seconde disposition de commutation, une résistance totale résultante de l'élément résistif (24) dans la première disposition de commutation étant différente de la résistance totale résultante de l'élément résistif (24) dans la seconde disposition de commutation,

(h) et

- la bobine excitable (4) comprend au moins un premier élément de bobine et un second élément de bobine, le premier élément de bobine et le second élément de bobine étant excitables simultanément ou séparément, et/ou

- la bobine excitable (4) présente une pluralité de points de contact par lesquels la bobine peut être excitée,

de sorte qu'une longueur effective de la bobine excitable (4) est réglable.

2. Balance de Kibble (2) selon la revendication 1, **caractérisée en ce que** la balance de Kibble (2) présente un bras de pesage (12) qui est disposé de manière rotative sur un support (14), la balance de Kibble (2) présentant au moins une première bobine excitable (4) et une seconde bobine excitable (4), et la première bobine excitable (4) est disposée à une première distance du support (14) et la seconde bobine excitable (4) est disposée à une seconde distance du support (14) sur le bras de pesage (12), et la première distance et la seconde distance définissent des premières longueurs de levier $H_1$.

3. Balance de Kibble (2) selon la revendication 2, **caractérisée en ce qu'**une distance entre le support (14) et le récepteur de charge définit une seconde longueur de levier $H_2$, et un rapport de levier maximal $H_1:H_2$ est d'au moins 10:1.

4. Balance de Kibble (2) selon l'une des revendications 2 et 3, **caractérisée en ce que** la balance de Kibble (2) comprend un bras de guidage parallèle (16) disposé sur un second support (18) et disposé sur le bras de pesage (12) de telle sorte qu'un mouvement de la bobine excitable (4) dans le champ magnétique n'entraîne pas de modification d'un angle d'inclinaison de la bobine (4) par rapport au champ magnétique, en mode de fonctionnement statique et en mode de fonctionnement dynamique.

5. Balance de Kibble (2) selon l'une des revendications précédentes, **caractérisée en ce que** la balance de Kibble (2) présente une incertitude de mesure de $10^{-3}$ au maximum, lorsque la pièce à peser (10) présente une masse de 1 mg à 1 kg, la balance de Kibble (2) étant accompagnée d'un certificat d'étalonnage indiquant l'incertitude de mesure.

6. Procédé de fonctionnement d'une balance de Kibble (2) selon l'une des revendications précédentes, **caractérisé par** l'étape consistant à :
amener lesdits au moins deux éléments résistifs partiels de l'élément résistif (24) dans une première disposition de commutation ou dans une seconde disposition de commutation, en fonction d'une masse attendue $m_e$ de la pièce à peser (10), de sorte qu'une voltage U chutant aux bornes de l'élément résistif (24) se trouve toujours dans une plage d'une voltage prédéterminée $U_v \pm 82$ % lors de l'utilisation de pièces à peser (10) ayant des masses de 1 mg à 1 kg.

7. Procédé selon la revendication 6, **caractérisé en ce qu'**en supplément, un rapport de levier $H_1:H_2$ est choisi en fonction de la masse attendue $m_e$ de la pièce à peser (10), de sorte qu'une voltage U chutant aux bornes de l'élément résistif (24) se trouve toujours dans une plage d'une voltage prédéterminée $U_v \pm 82$ % lors de l'utilisation de pièces à peser (10) ayant des masses de 1 mg à 1 kg.

8. Procédé selon l'une des revendications 6 et 7, **caractérisé en ce que** la masse attendue $m_e$ est déterminée au moyen d'une mesure récapitulative, la mesure récapitulative étant effectuée avec la balance de Kibble (2) ou avec une autre balance.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2621483 C2
- JP S6388407 A